# EUROPÄISCHE PATENTSCHRIFT

(11) **EP 1 418 092 B1**
(45) Veröffentlichungstag und Bekanntmachung des Hinweises auf die Patenterteilung: **10.08.2005**
(21) Anmeldenummer: 03025587.1
(22) Anmeldetag: 08.11.2003
(51) Int. Cl.: B60R 13/02, D04H 1/42

(54) **Schutzvlies für Bauteile**
Protective fleece for components
Nappe non-tissée protégeante pour des composants

(30) Priorität: 11.11.2002 DE 10252295
(43) Veröffentlichungstag der Anmeldung: 12.05.2004
(73) Patentinhaber: MöllerTech GmbH, 33649 Bielefeld (DE)
(72) Erfinder: Drees, Matthias, Dipl.-Ing., 48488 Emsbüren (DE)
(74) Vertreter: Schirmer, Siegfried, Dipl.-Ing.

(56) Entgegenhaltungen:
- DE-A- 3 022 017
- DE-A- 3 621 658
- DE-A- 10 106 274
- DE-A- 19 654 246
- DE-A- 19 859 924

## Beschreibung

Die Erfindung betrifft ein Schutzvlies für Bauteile mit einer Oberfläche aus Dekormaterial, insbesondere zur Verwendung bei Innenverkleidungsteilen für die Automobilindustrie, nach dem oberbegriff des Anspruchs 1. Ein derartiges schutzvlies ist aus der DE-A- 196 54 246 sowie aus der DE-A- 36 21 658 bekannt.

Innenverkleidungsteile für die Automobilindustrie werden bevorzugt aus Polypropylen hergestellt und die Oberfläche mit einem dekorativen Material, wie Textil, Folie, Leder, Kunstleder usw. versehen. Dabei erfolgt die Herstellung dieser Bauteile nach an sich bekannten Verfahren, wie Spritzgießen, Strangablegen, Hinterpressen und Hinterblasen. Im Gegensatz zu früher, wo diese Dekormaterialien in einem nachträglich durchgeführten Arbeitsschritt auf die Oberfläche aufgebracht wurden, wird heute aus Kostengründen das Dekormaterial direkt in das Produktionswerkzeug eingelegt und im sogenannten One-step-Verfahren mit dem Kunststoffmaterial verbunden. Dabei wird das Dekormaterial von der Rückseite mit einem Schutzvlies versehen, um dieses vor der hohen Schmelzetemperatur zu schützen und ein Durchdringen der Oberware durch die flüssige Schmelze zu vermeiden. Bevorzugt wird für das Trägermaterial Polypropylen in unverstärkter oder verstärkter Ausführung eingesetzt. Als Verstärkungsstoff wird beispielsweise Talkum, Kreide, Glimmer, Naturfaser, Glasfaser usw. verwendet. Um ein Aufschmelzen des Schutzvlieses zu vermeiden wird hierfür ein Faserwerkstoff eingesetzt, der aus Fasern besteht, die gegenüber dem Polypropylen einen höheren Schmelzpunkt aufweisen. Dieses können beispielsweise Viskose-, Polyamid- oder Polyesterfasern sein. Das Schutzvlies kann je nach Einsatzgebiet aus Mischfasern der genannten Werkstoffe bestehen, wobei das Mischungsverhältnis beliebig gestaltet werden kann und eine unterschiedliche Dicke (Flächengewicht) aufweisen. Dabei führt unter Umständen eine zu geringe Dicke zu Durchspritzungen und eine zu große Dicke wegen der fehlenden Dehneigenschaften zu einer Faltenbildung an der Oberfläche. Nachteilig ist bei den genannten Fasern aber auch, daß diese gegenüber dem Polypropylen eine unterschiedliche Schwindung aufweisen und zu einem Verzug der Bauteile führen. Um dieser Verzugsneigung entgegenzuwirken, sind in der Vergangenheit Mischvliese entwickelt worden, die aus Polypropylen oder in variierenden Anteilen aus Polypropylen und anderen höher schmelzenden synthetischen Fasern bestehen. Hierdurch wird die Verzugsneigung reduziert bzw. vollständig aufgehoben. Da die Schmelzetemperatur des Polypropylens und der Schmelzpunkt der PP-Vliesfasern aber weitestgehend identisch sind führt dieses dazu, daß die Schmelze durch den Energieeintrag zu einem Aufschmelzen der PP-Fasern führt und trotz eines synthetischen Faseranteils im Vlies in kritischen Bereichen das Vlies durchdringt und zu Oberflächenstörungen im Dekormaterial führt.

Der Erfindung liegt die Aufgabe zugrunde, das Schutzvlies so auszubilden, daß auf der einen Seite zu keinem oder nur geringem Verzug führt und auf der anderen Seite ein Durchdringen der schmelzflüssigen Masse verhindert.

Diese Aufgabe wird erfindungsgemäß durch ein schutzvlier mit der merkmalen der Anspruch, 1 gelöst. Erfindungsgemäß besteht eine erste Schicht des Schutzvlieses aus gegenüber Polypropylen höherschmelzenden Fasern oder Mischfasern und eine zweite Schicht aus reinen Polypropylenfasern bzw. aus einer Mischung aus Polypropylenfasern und anderen höher schmelzenden synthetischen Fasern. Dabei sind die Schichten des Schutzvlieses fest miteinander verbunden, wobei die Schichten des Schutzvlieses durch ein Klebemedium oder durch eine Vemadelung miteinander verbunden sein können.

Zweckmäßige Ausgestaltungen der Erfindung sind in den übrigen Unteransprüchen aufgezeigt.

Durch die erfindungsgemäße Ausbildung ist ein Schutzvlies geschaffen, das wie ein Bimetall der Verzugsneigung des Trägerwerkstoffs entgegenwirkt und je nach Positionierung des Schutzvlieses zu einer gezielt einstellbaren Formgenauigkeit führt. Dabei kann sowohl die aus höher schmelzenden Fasern bestehende Schicht als auch die aus Polypropylen oder aus Mischungen mit Polypropylen bestehende Schicht als die dem Dekor zugewandte Seite durch entsprechende Prozeßschritte, beispielsweise Klebekaschierung, verbunden werden.

Unter Verwendung des erfindungsgemäßen Schutzvlieses können Bauteile hergestellt werden, deren Dekormaterial keine Störungen aufweist und deren Formgenauigkeit an die Einbauverhältnisse angepaßt werden kann.

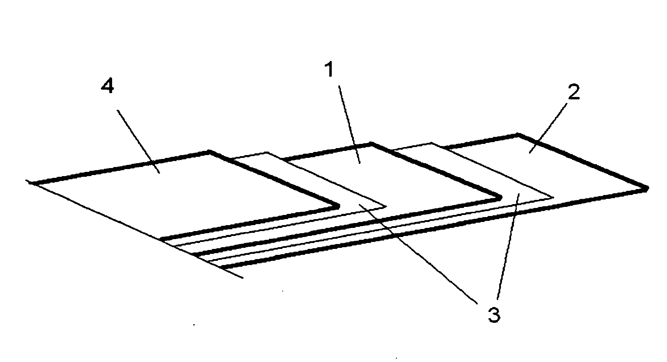

Ein Ausführungsbeispiel der Erfindung ist in der Zeichnung dargestellt und wird nachfolgend näher erläutert. Die einzige Figur zeigt den Aufbau eines Schutzvlieses mit aufgebrachtem Dekormaterial.

Die Schutzvliese 1 und 2 sind über ein Klebemedium 3 miteinander verbunden. Das Dekormaterial 4 ist mit dem aus zwei Schichten 1; 2 bestehenden Schutzvlies ebenfalls über ein Klebemedium 3 verbunden. Das so gebildete vorgefertigte Element wird direkt in das Produktionswerkzeug eingelegt.

### Aufstellung der Bezugszeichen:

- 1: Schutzvlies
- 2: Schutzvlies
- 3: Klebemedium
- 4: Dekormaterial

## Patentansprüche

1. Schutzvlies für Bauteile mit einer Oberfläche aus Dekormaterial (4), insbesondere zur Verwendung bei Innenverkleidungsteilen für die Automobilindustrie, mit einem auf der Rückseite des Dekormaterials (4) fest angeordneten mehrschichtigen Schutzvlies (1; 2), deren Schichten fest miteinander verbunden sind, **dadurch gekennzeichnet, daß** eine erste Schicht des Schutzvlieses (1) aus gegenüber Polypropylen höher schmelzenden Fasern oder Mischfasern und eine zweite Schicht des Schutzvlieses (2) aus reinen Polypropylenfasern bzw. aus einer Mischung aus Polypropylenfasern und anderen höher schmelzenden synthetischen Fasern besteht.

2. Schutzvlies nach Anspruch 1, **dadurch gekennzeichnet, daß** die Anteiligkeit der Mischungsverhältnisse beliebig variierbar ist.

3. Schutzvlies nach Anspruch 1 oder 2, **dadurch gekennzeichnet, daß** die Dicke und Dichte der beiden Schichten (1; 2) beliebig variierbar sind.

4. Schutzvlies nach einem der Ansprüche 1 bis 3, **dadurch gekennzeichnet, daß** die Schichten (1; 2) des Schutzvlieses durch ein Klebemedium (3) miteinander verbunden sind.

## Claims

1. Protective non-woven material for components with a surface of decorative material (4), particularly for use in interior lining components for the automobile industry, with a multi-layered protective non-woven material (1; 2) which is fixedly arranged on the rear side of the decorative material (4) and the layers of which are fixedly connected together, **characterised in that** a first layer of the protective non-woven material (1) consists of fibres or mixed fibres having a higher melting point relative to polypropylene and a second layer of the protective non-woven material (2) consists of pure polypropylene fibres or of a mixture of polypropylene fibres and other synthetic fibres having a high melting point.

2. Protective non-woven material according to claim 1, **characterised in that** the proportionality of the mixture ratios is variable as desired.

3. Protective non-woven material according to claim 1 or 2, **characterised in that** the thickness and the density of the two layers (1; 2) are variable as desired.

4. Protective non-woven material according to one of claims 1 to 3, **characterised in that** the layers (1; 2) of the protective non-woven material are connected together by an adhesive medium (3).

## Revendications

1. Non-tissé de protection pour composants avec une surface en matériau décoratif (4), notamment pour être utilisé pour des éléments de revêtement intérieur dans l'industrie automobile, comprenant un non-tissé de protection (1 ; 2) multicouche disposé de façon fixe sur la face arrière du matériau décoratif (4) et dont les couches sont reliées de façon fixe les unes aux autres,
**caractérisé en ce qu'**
une première couche du non-tissé (1) comprend des fibres ou des fibres mixtes ayant un point de fusion supérieur à celui du polypropylène, et une deuxième couche du non-tissé de protection (2) comprend des fibres de polypropylène pur ou un mélange de fibres de polypropylène et d'autres fibres synthétiques à point de fusion élevé.

2. Non-tissé de protection selon la revendication 1,
**caractérisé en ce que**
la proportionnalité des rapports de mélange est variable d'une manière quelconque.

3. Non-tissé de protection selon la revendication 1 ou 2,
**caractérisé en ce que**
l'épaisseur et la densité des deux couches (1 ; 2) sont variables d'une manière quelconque.

4. Non-tissé de protection selon l'une quelconque des revendications 1 à 3,
**caractérisé en ce que**
les couches (1 ; 2) du non-tissé de protection sont reliées les unes aux autres par un moyen adhésif (3).
